## Europäisches Patentamt

## European Patent Office

## Office européen des brevets

(11) Numéro de publication : **0 377 542 B1**

(12) **FASCICULE DE BREVET EUROPEEN**

(45) Date de publication du fascicule du brevet :
**04.11.92 Bulletin 92/45**

(51) Int. Cl.$^5$ : **A22B 5/20**

(21) Numéro de dépôt : **90420002.9**

(22) Date de dépôt : **03.01.90**

(54) **Elément de guidage interne réglable pour appareil de découpe de carcasses d'animaux de boucherie et procédé de découpe afférent.**

(30) Priorité : **06.01.89 FR 8900295**

(43) Date de publication de la demande :
**11.07.90 Bulletin 90/28**

(45) Mention de la délivrance du brevet :
**04.11.92 Bulletin 92/45**

(84) Etats contractants désignés :
**AT BE CH DE DK ES GB IT LI LU NL SE**

(56) Documents cités :
**DE-A- 2 600 766**
**FR-A- 2 576 183**
**US-A- 3 916 482**

(73) Titulaire : **Société Anonyme : SOCIETE DES ATELIERS DE CONSTRUCTIONS MECANIQUES: LUCIEN DURAND Quartier des Buis BAIX F-07210 Chomerac (FR)**

(72) Inventeur : **Durand, Lucien Avenue de la Gare F-07210 Baix (FR)**

(74) Mandataire : **Ropital-Bonvarlet, Claude Cabinet BEAU DE LOMENIE, 51, avenue Jean-Jaurès F-69007 Lyon (FR)**

EP 0 377 542 B1

## Description

La présente invention concerne le domaine technique général des appareils de découpe ou de fendage longitudinal des caracasses d'animaux de boucherie et, plus particulièrement, les appareils de fendage automatisés en relation avec une chaîne de transport sur laquelle les carcasses sont suspendues verticalement.

Au cours de la chaîne complète de traitement des carcasses d'animaux de boucherie, qu'il s'agisse d'animaux d'espèce porcine, bovine ou ovine, la phase de découpe longitudinale de la carcasse est particulièrement importante. Il s'agit, en effet, de réaliser une découpe longitudinale en deux parties rigoureusement égales, afin d'obtenir deux demi-carcasses dans lesquelles le rapport de viande et d'os est équivalent.

Jusqu'à présent, on a tenté d'observer cette contrainte de précision de coupe en réalisant des systèmes de guidage de l'organe de coupe le long de la colonne vertébrale de l'animal. On connaît ainsi, par la demande DE-A-26 00 766, un appareil de découpe comprenant un chariot de fendage, guidé verticalement sur un bâti principal, de manière à pouvoir être déplacé selon une direction verticale et sur lequel sont montés, solidairement, deux éléments de guidage et un organe de coupe. Les éléments de guidage, fixés à l'extrémité de supports, comprennent un guide extérieur constitué, par exemple, d'une paire de galets destinés à reposer contre la face externe dorsale de l'animal et à se guider ainsi sur la colonne vertébrale. Un guide intérieur, constitué également d'une paire de galets, repose sur la face interne de l'animal et contre la colonne vertébrale, en regard des galets du guide externe. Grâce à ce montage, il est possible de maintenir l'organe de coupe dans une position sensiblement centrale, le long de la colonne vertébrale.

Il est reconnu que ce type d'appareil de découpe fournit, en général, deux demi-carcasses sensiblement égales. Cependant, on a constaté, au fur et à mesure de l'utilisation de ces appareils, une détérioration importante de la qualité et de la précision de coupe conduisant à une découpe non symétrique des carcasses. En effet, l'utilisation continue et prolongée de ces appareils provoque, en fonction des jeux de montage des diverses pièces de l'appareil et des déformations ou de l'usure survenant au niveau de l'organe de coupe, une rupture de la symétrie verticale du montage originel existant entre l'organe de coupe et les éléments de guidage. La rupture de cette symétrie provoque une découpe dissymétrique de la carcasse.

Par ailleurs, ces appareils, étant exclusivement conçus pour réaliser des découpes symétriques, il n'est pas possible d'effectuer d'autres types de découpes qui nécessitent, justement, une coupe dissymétrique mais contrôlée de la carcasse, du genre coupe "bacon".

L'objet de l'invention vise à remédier aux inconvénients des appareils de l'art antérieur et à résoudre le problème du contrôle de la précision de la découpe.

Un autre objet de l'invention vise à réaliser un appareil de découpe permettant de conserver une bonne précision de coupe, malgré l'usure et les déformations des organes de découpe et de guidage.

Un autre objet de l'invention consiste à proposer un appareil de découpe présentant les éléments nécessaires à l'obtention de découpes dont la symétrie ou dissymétrie est contrôlée.

Un autre objet de l'invention vise à proposer un procédé de découpe permettant d'assurer un contrôle et un réglage de la symétrie du fendage de la carcasse.

Pour répondre à ces objectifs, l'appareil de découpe selon l'invention est un appareil de découpe pour le fendage d'une carcasse d'animal de boucherie, notamment pour une carcasse d'espèce porcine, comprenant :

- un chariot de fendage monté mobile sur un bâti selon une possibilité de mouvement de va-et-vient définissant une direction de fendage,
- un système de guidage du fendage solidaire du chariot de guidage et comportant :
    . un élément de guidage externe destiné à reposer contre la face dorsale externe de la carcasse et, de préférence, contre la colonne vertébrale de l'animal,
    . un élément de guidage interne monté à l'extrémité d'une poutre support solidaire du chariot de fendage, ledit élément étant destiné à reposer contre la face interne de la carcasse en regard de l'élément de guidage externe,
- et un organe de coupe solidaire du chariot de fendage et apte à assurer le fendage de la carcasse lors du mouvement du chariot de fendage selon la direction de fendage,
    caractérisé en ce que :
- la poutre support est montée solidaire du chariot de fendage par un montage à pivot permettant une possibilité de rotation angulaire de la poutre autour de l'axe de pivotement qui s'étend selon la direction de fendage,
- un moyen de réglage, interposé entre le chariot de fendage et la poutre support, assure le réglage de la position angulaire de la poutre autour du pivot, ainsi que son blocage en position.

Le procédé de découpe selon l'invention est un procédé de découpe par fendage longitudinal d'une carcasse d'animal de boucherie à l'aide d'un système de coupe définissant un plan de coupe, procédé dans lequel :

- le chariot de fendage est amené en position de travail au contact de la carcasse,
- le système de guidage du fendage est mis en place par positionnement d'organes de guidage interne et externe contre la colonne vertébrale de la carcasse de l'animal,

caractérisé en ce qu'il consiste à régler la position du plan de coupe par rapport à la carcasse par réglage de la position angulaire d'une poutre support de l'organe de guidage interne.

Diverses autres caractéristiques ressortent de la description faite ci-dessous en référence aux dessins annexés qui montrent, à titre d'exemples non limitatifs, des formes de réalisation de l'objet de l'invention.

La **fig. 1** montre une vue générale de côté d'un appareil de découpe avec une carcasse d'animal suspendue.

La **fig. 2** montre une vue en perspective d'une réalisation préférentielle d'une poutre support selon l'invention.

Les **fig. 3** et **4** montrent, respectivement, une vue de dessous et une vue en coupe selon la ligne **IV-IV** de la **fig. 3**, de la poutre support présentée à la **fig. 2**.

La **fig. 5** illustre, de manière schématique, un mode particuler de commande du mouvement de la poutre support.

La **fig. 6** illustre, par une vue de dessus, une variante de réalisation combinant un vérin et un excentrique.

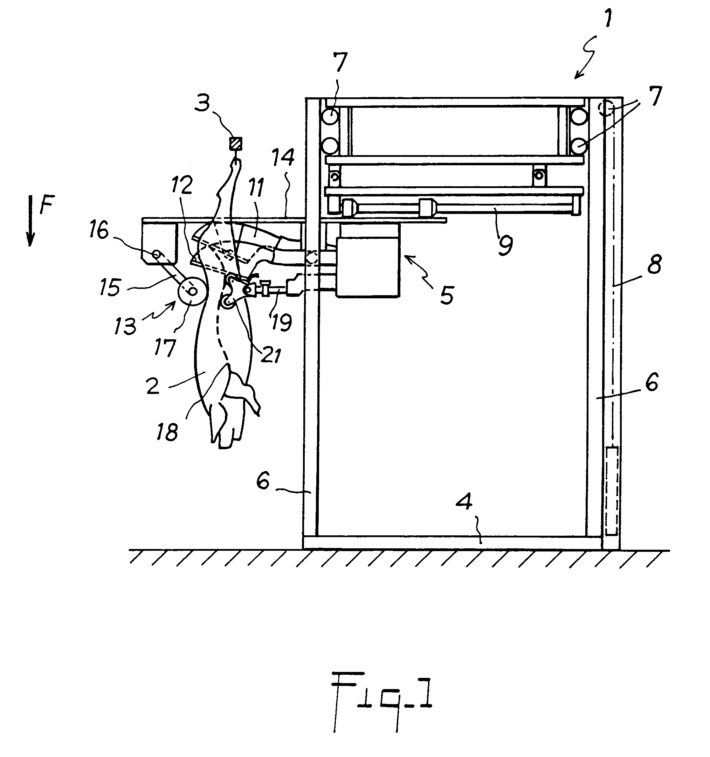

Il a été représenté, à la **fig. 1**, une vue générale d'un ensemble de découpe **1** destiné à assurer la découpe par fendage longitudinal selon la direction **F** de la carcasse **2** d'un animal de boucherie, qui est amenée devant l'ensemble de découpe **1**, par l'intermédiaire d'un rail de convoyage **3** auquel la carcasse est suspendue par les membres postérieurs.

La carcasse **2**, représentée schématiquement, est celle d'un animal d'espèce porcine, mais il est bien évident que l'invention s'applique, également, aux caracasses d'animaux de tout type et, notamment, aux carcasses de type ovin, bovin et équin.

L'ensemble de découpe **1** comporte un bâti principal **4** sur lequel est monté, avec possibilité de coulissement vertical, un chariot de fendage **5**. Le coulissement vertical du chariot de fendage **5** peut être assuré par un ensemble de glissières verticales **6**, d'organes de roulement **7** et de câbles **8**.

Le chariot de fendage **5** est, également, monté sur un bâti secondaire **9**, de façon à pouvoir effectuer un coulissement horizontal. Grâce à cette double possibilité de coulissement, le chariot de guidage **5** peut, de manière classique, d'une part, venir occuper une position de travail en contact avec la carcasse à découper lorsque celle-ci se présente en face de l'ensemble de decoupe **1** et, d'autre part, assurer ensuite la découpe longitudinale de la carcasse lors de son coulissement vertical.

Un organe de coupe est monté solidaire du chariot de fendage **5** et, dans l'exemple représenté, il est constitué de deux lames **11**, **12** articulées l'une par rapport à l'autre à l'aide d'un dispositif à excentrique non représenté sur la **fig. 1**. D'autres organes de coupe sont naturellement envisageables, sans sortir du cadre de l'invention.

Le positionnement relatif de la carcasse **2** et du chariot de fendage **5** est assuré par un système de guidage **13** comprenant un élément externe et un élément interne. Par "externe", il est fait référence à la surface externe ou dorsale de la carcasse **2** de l'animal, tandis que par "interne" on se réfère aux surfaces internes de l'enveloppe de l'animal, c'est-à-dire celles, par exemple, en contact avec les cavités gastriques.

L'élément de guidage interne, qui fait plus particulièrement partie de l'invention, est monté à l'extrémité d'une poutre support **19** solidaire du chariot de fendage **5** et comporte un corps de guidage **21**, constitué, par exemple, de deux paires de galets **22**, **23**.

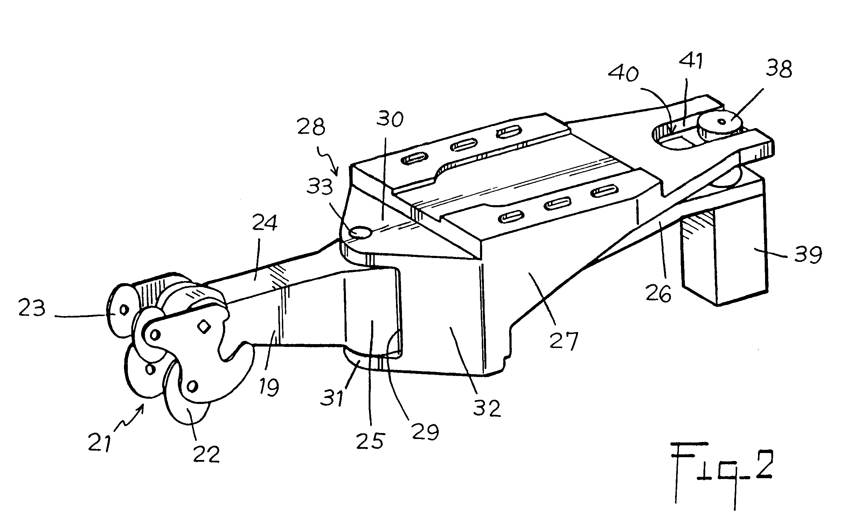

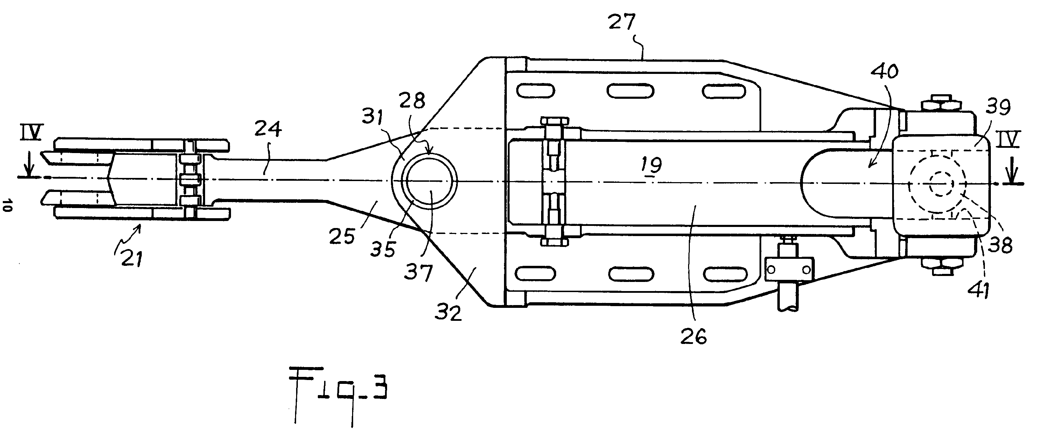

Les **fig. 2** et **3** montrent un exemple préférentiel, mais non limitatif, d'agencement du montage de l'élément de guidage interne sur le chariot de fendage **5**.

La poutre support **19** présente, de préférence, une section qui varie d'une extrémité à l'autre. Ainsi, la partie avant **24**, supportant le corps de guidage **21**, possède, par exemple, une section rectangulaire croissante dans le sens transversal et dans la direction opposée à celle du corps de guidage **21**. La partie avant **24** se poursuit par une partie sensiblement médiane qui constitue une zone de renforcement **25**. La poutre **19** possède en effet, avantageusement, à ce niveau, une section progressivement croissante dans des directions radiales par rapport à l'axe longitudinal de la poutre support **19**. La partie terminale **26** peut simplement consister en une zone à section transversale rectangulaire d'épaisseur décroissante à partir de la zone de renforcement **25**, puis d'épaisseur constante ou non, de section en forme de **"U"** par exemple.

La poutre support **19** est montée solidaire sur le chariot de guidage **5**, par l'intermédiaire d'un bloc support de poutre **27**, également solidaire du chariot de guidage **5**. Le montage s'effectue à l'aide d'un montage à pivot **28** permettant une relation angulaire de la poutre support **19** autour de l'axe **X-X'** de pivotement. Le bloc support de poutre **27** est, avantageusement, réalisé de manière à comporter, dans sa partie extrême avant dirigée vers le corps de guidage **21**, une découpe **29** à travers laquelle la poutre support **19** est engagée et dont les bords supérieurs et inférieurs, respectivement **30**, **31**, forment une chappe **32**.

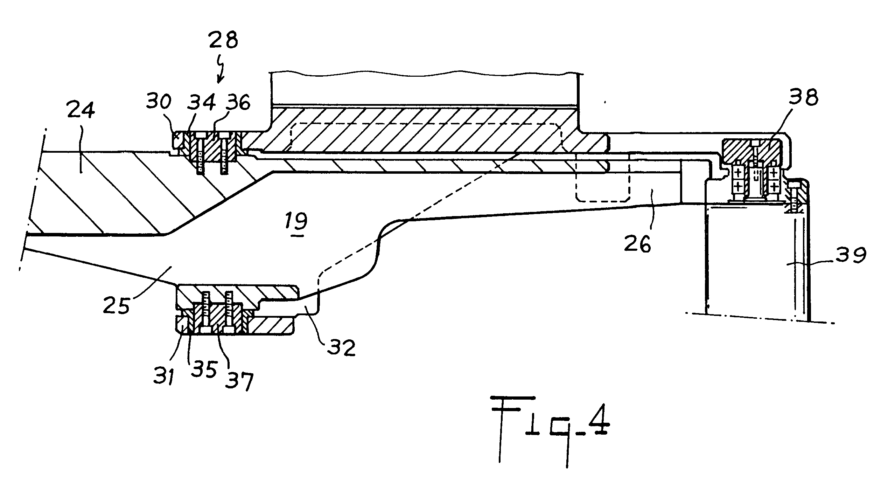

Chaque bord **30**, **31** est muni d'un orifice **33** pour permettre le montage de l'articulation à pivot **28** qui est, de préférence, prévue sur la poutre support **19** dans la zone de renforcement **25**. Plusieurs types de montage à pivot sont envisageables et on a représenté, à la **fig. 4**, une articulation qui comporte deux douilles **34**, **35** d'habillage de chacun des orifices **33** de la chappe **32** servant de palier à deux tourillons **36**, **37** fixés sur la poutre support **19** au moyen de vis de serrage, par exemple.

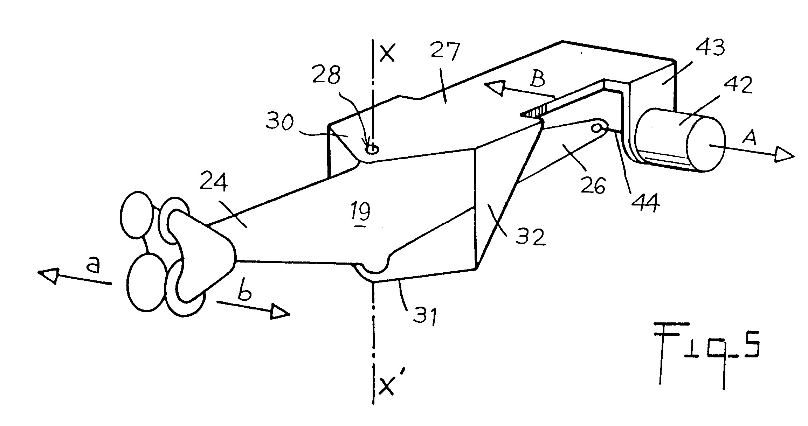

La commande de la rotation angulaire et de blocage de la poutre support **19** autour de l'axe **X-X'** du pivot **28** peut être réalisée avec des moyens de réglage et de commande divers et les **fig. 2** et **5** illustrent deux variantes de réalisation préférentielles.

La **fig. 2** représente une variante constituée d'un excentrique et, par exemple, d'une came **38**, entraînée par un organe moteur **39**, du type moteur électrique et montée rotative et excentrée sur l'arbre moteur et sur la partie terminale **26** de la poutre support **19**. La came **38** est en appui sur l'extrémité du bloc support de poutre **27** opposée à la chappe **32**, extrémité dans laquelle est ménagé un dégagement **40** formant un chemin de came **41**.

La **fig. 5** représente une variante dans laquelle un vérin **42** est monté en appui contre une aile latérale **43** s'étendant verticalement à partir de la partie terminale du bloc support de poutre **27**. La tige **44** du vérin **42** est en appui sur la partie terminale **26** de la poutre support **19** et dirigée, de préférence, selon une direction orthogonale à l'axe **x-x'**.

Il est, également, possible, selon le même principe, d'assurer la rotation angulaire de la poutre support **19** au moyen de vis micrométriques montées directement ou non en appui sur la poutre **19** à travers le bloc support de poutre **27**.

De même, on peut, sans sortir du cadre de l'invention, inverser le montage de l'élément mobile de commande, came ou tige de vérin, qui vient alors en appui, respectivement, contre la poutre support **19** et contre le bloc support de poutre **27**. On prévoit, également d'adapter des moyens de commande à distance de l'élément mobile de commande.

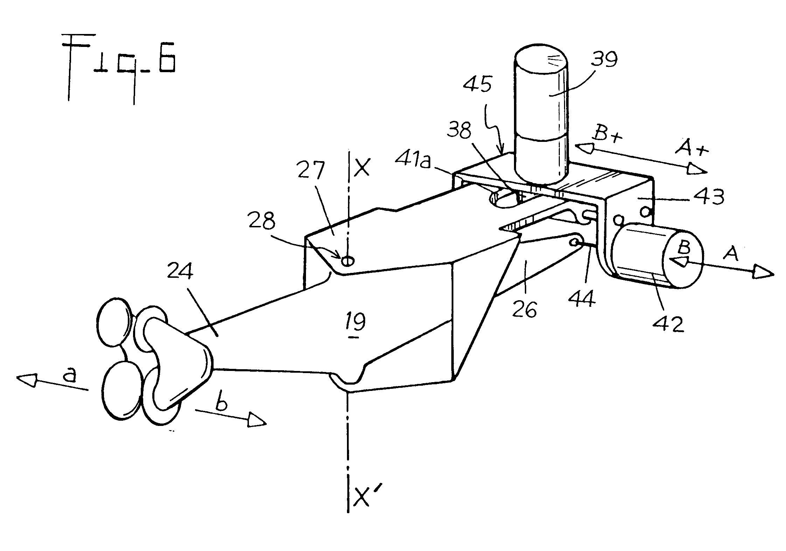

La **fig. 6** montre une autre variante de montage associant un vérin et une came rotative excentrée. La came rotative **38** peut être montée d'une manière similaire à celle de la variante de la **fig. 2**, c'est-à-dire en appui contre un chemin de came **41a** formé dans un dégagement du bloc support de poutre **27**. L'ensemble de la came **38** et du moteur **39** est fixé sur un bloc déplaçable **45** comprenant une aile latérale **43** sur laquelle est monté un vérin **42** et sa tige **44**. Le bloc déplaçable **45** est, par exemple, monté à glissement par rapport au bloc support de poutre **27** et la tige **44** est en appui sur l'extrémité de la poutre support **19**. Par ce biais, il est possible d'assurer une commande en deux temps de la position angulaire de la poutre support **19**, en privilégiant d'abord une rotation rapide et de grande amplitude correspondant à un réglage approximatif de position par le vérin **44** (flèches **A** et **B**), puis en affinant le réglage au moyen de la came rotative **38** provoquant le déplacement du bloc **45** (flèches **A+** et **B+**).

Le montage original de la poutre support **19** est tel que son plan de symétrie vertical coïncide avec le plan de fendage longitudinal défini par l'organe de coupe. En position normale de travail, les paires de galets **17**, **22** et **23** sont donc en principe symétriques par rapport à la colonne vertébrale **18**.

Le fonctionnement de l'appareil de découpe est le suivant.

La carcasse **2** d'un animal étant immobilisée devant l'appareil de découpe, le chariot de fendage **5** est amené en position de travail par coulissement horizontal et vertical, en même temps que les organes de guidage du fendage, en l'occurrence les galets **17**, **22**, **23** sont mis en place contre la colonne vertébrale **18** de la carcasse **2**. Si au cours des fendages précédents il a été constaté une dissymétrie de la coupe longitudinale de la carcasse par rapport au plan de fendage médian théorique ou, encore, si on constate que le plan de fendage défini par l'organe de coupe ne coïncide plus avec le plan de symétrie vertical de l'organe de guidage interne, la position angulaire de la poutre de support **19** est réglée par la mise en action du moyen de commande, en l'occurrence la came excentrée **38**, la tige de vérin **44** ou, encore, les vis micrométriques. La came excentrée **38** agissant sur le chemin de came **41** ou la tige **44** agissant sur la poutre support **19** exercent une poussée ou traction selon les directions **A** ou **B** (**fig. 5**) conduisant à une rotation de la poutre support **19**. Le blocage en position est assuré par l'organe moteur **39**, **42**.

Suivant la position du pivot **28** sur la poutre support **19**, l'amplitude de la rotation angulaire du corps de guidage interne **21** est plus ou moins accentuée dans une direction opposée **a** ou **b** à celle des directions **A** et **B**.

Le corps de guidage interne **21** est ainsi repositionné de façon que les jeux de montage des divers organes de l'appareil de coupe ou, encore, que l'usure des parties coupantes du dispositif de fendage soient rattrapés. Il est ainsi possible, à tout moment, de manière particulièrement simple et rapide, sans interruption de la chaîne d'abattage, de corriger, par commande à distance, une éventuelle dissymétrie de fendage de la carcasse.

Par ailleurs, lorsque des fendages dissymétriques de caracasses sont requis, dans le cas d'une coupe "bacon", par exemple, la position angulaire de la poutre support **19** est réglée de manière que le corps de guidage **21** assure, avec l'organe de coupe, un fendage dissymétrique selon le plan de fendage souhaité.

## Revendications

**1 -** Appareil de découpe pour le fendage d'une carcasse (**2**) d'animal de boucherie, notamment pour une carcasse d'espèce porcine, comprenant :
- un chariot de fendage (**5**) monté mobile sur un bâti (**4**) selon une possibilité de mouvement de va-et-vient correspondant à la direction de fendage (F),
- un système de guidage (13) du fendage solidaire du chariot de fendage (5) et comportant :
    . un élément de guidage externe (17) destiné à reposer contre la face dorsale externe de la carcasse (2) et, de préférence, contre la colonne vertébrale (18) de l'animal,
    . un élément de guidage interne (21) monté à l'extrémité d'une poutre support (19) solidaire du chariot de fendage (5), ledit élément étant destiné à reposer contre la face interne de la carcasse (2) en regard de l'élément de guidage externe (17),
- et un organe de coupe (11, 12) solidaire du chariot de fendage (5) et apte à assurer le fendage de la carcasse (2) lors du mouvement du chariot de fendage (5) selon la direction (F),
    caractérisé en ce que :
- la poutre support (19) est montée solidaire du chariot de fendage (5) par un montage à pivot (28) permettant une possibilité de rotation angulaire de la poutre (19) autour de l'axe de pivotement (X-X') qui s'étend selon la direction de fendage (F),
- un moyen de réglage, interposé entre le chariot de fendage (5) et la poutre support (19) pour assurer le réglage de la position angulaire de la poutre (19) autour du pivot (28), ainsi que son blocage en position.

**2** - Appareil selon la revendication 1, caractérisé en ce que le montage à pivot (28) comprend, d'une part, un bloc support de poutre (27), lié au chariot de fendage (5) et comportant, à l'extrémité dirigée vers l'élément de guidage interne (21), une découpe (29) formant chappe (32) à travers laquelle la poutre support (19) est engagée et, d'autre part, un pivot traversant la chappe et la poutre support.

**3** - Appareil selon la revendication 2, caractérisé en ce que le moyen de réglage est interposé entre le chariot de fendage (5) et la poutre support (19) du côté opposé à l'élément de guidage interne (21) par rapport au pivot (28).

**4** - Appareil selon la revendication 3, caractérisé en ce que le moyen de réglage est du type vérin (44).

**5** - Appareil selon l'une des revendications 1 à 4, caractérisé en ce que le moyen de réglage comprend un excentrique (38).

**6** - Appareil selon la revendication 5, caractérisé en ce que l'excentrique consiste en une came rotative (38) montée excentrée autour de son axe de rotation.

**7** - Appareil selon la revendication 3, caractérisé en ce que le moyen de réglage comprend des vis de réglage, du type vis micrométriques.

**8** - Procédé de découpe par fendage longitudinal d'une carcasse (2) d'animal de boucherie, à l'aide d'un organe de coupe (11, 12) définissant un plan de coupe, procédé dans lequel :

- le chariot de fendage (5) est amené en position de travail au contact de la carcasse (2),
- le système de guidage (13) du fendage est mis en place par positionnement d'éléments de guidage interne et externe contre la colonne vertébrale (18) de la carcasse (2) de l'animal,
    caractérisé en ce qu'il consiste à régler la position du plan de coupe par rapport à la carcasse (2) par réglage de la position angulaire d'une poutre support (19) de l'éléments de guidage interne.

**9** - Procédé selon la revendication 8, caractérisé en ce que le réglage de la position de la poutre support (19) s'effectue par commande à distance avant le fendage de chaque carcasse (2).

## Claims

**1** - Cutting up apparatus for cleaving the carcass (2) of a slaughtered animal, in particular for use with a pig carcass, the apparatus comprising:
- a cleaving carriage (5) movably mounted on a frame (4) along a possible back and forth motion corresponding to the cleaving direction (F),
- a cleaving guidance system (13) fixed to the cleaving carriage (5) and comprising :
    . an outside guide element (17) for resting against the outside back face of the carcass (2) and preferably against the backbone (18) of the animal,
    . an inside guide element (21) mounted at the end of the support beam (19) fixed to the cleaving carriage (5), said element being intended to rest against the inside face of the carcass (2) facing the outside guide element (17),
- and a cutting instrument (11, 12) fixed to the cleaving carriage (5) and suitable for cleaving the carcass (2) during motion of the cleaving carriage (5) along the direction (F),
    charaterized in that :
- the support beam (19) is fixed to the cleaving carriage (5) via a pivot mount (28) enabling the support beam (19) to pivot angularly about a pivot axis (X-X') extending along the cleaving direction (F),
- an adjustment means interposed between the cleaving carriage (5) and the support beam (19) to adjust the angular position of the support beam (19) about the pivot (28) and to lock it in position.

**2** - Apparatus according to claim 1, characterized in that the pivot mount (28) comprises, on the one hand, a beam support block (27) connected to the cleaving carriage (5) and including a cut-out (29) at its end directed towards the inside guide element (21) to constitute a fork (32) in which the support beam (19) is engaged, and on the other hand, a pivot passing through the fork and the support beam.

3 - Apparatus according to claim 2, characterized in that the adjustment means is interposed between the cleaving carriage (5) and the support beam (19) on the opposite side of the inside guide element (21) with respect to the pivot (28).

4 - Apparatus according to claim 3 characterized in that the adjustment means is of the actuator type (44).

5 - Apparatus according to one of claims 1 to 4, characterized in that the adjustment means includes an excentric (38).

6 - Apparatus according to claim 5, characterized in that the excentric consists in a rotary cam (38) excentrically mounted about its axis of rotation.

7 - Apparatus according to claim 3, characterized in that the adjustment means comprises adjustment screws, of the micrometer screw type.

8 - Method of cutting up the carcass (2) of a slaughtered animal by cleaving it longitudinally using a cutting instrument (11, 12) defining a cutting up plane, method in which:
- the cleaving carriage (5) is moved to a working position in contact with the carcass (2),
- the cleaving guidance system (13) is put into position by placing inside and outside guide element against the backbone (18) of the animal carcass (2),
    charaterized in that it consists in adjusting the position of the cutting up plane relative to the carcass (2) by adjusting the angular position of a support beam (19) for supporting the inside guide elements.

9 - Method according to claim 8, characterized in that the position of the support beam (19) is adjusted by remote control prior to cleaving each carcass (2).

**Patentansprüche**

1. Zerteilvorrichtung zum Zerteilen der Karkasse (2) von Schlachttieren, insbesondere von Schweinekarkassen, die aufweist:
   - Einen Zerteilwagen (5), der derart beweglich auf einem Gestell (4) angebracht ist, daß er sich der Zerteilrichtung (F) entsprechend hin- und herbewegen kann,
   - ein Führungssystem (13) für die Zerteilung, das mit dem Zerteilwagen (5) fest verbunden ist und aufweist:
     . Ein Außenführungselement (17), das zur Anlage an der außen liegenden Rückseite der Karkasse (2), und vorzugsweise an der Wirbelsäule (18) des Tieres, vorgesehen ist,
     und
     . ein Innenführungselement (21), das am Ende eines Stützträgers (19) angeordnet ist, der mit dem Zerteilwagen (5) verbunden ist, wobei das Innenführungselement (21) zur Anlage an der Innenseite der Karkasse (2) gegenüber dem Außenführungselement (17) vorgesehen ist,
   - und eine Schneideinrichtung (11, 12), die mit dem Zerteilwagen (5) verbunden und so ausgebildet ist, daß sie bei Bewegung des Zerteilwagens (5) längs der Richtung (F) die Zerteilung der Karkasse (2) sicherstellt,
   **dadurch gekennzeichnet,** daß
   - der Stützträger (19) über ein Drehgelenk (28) am Zerteilwagen (5) angebracht ist, das eine Winkeldrehung des Stützträgers (19) um die Drehachse (X-X') erlaubt, die sich längs der Zerteilrichtung (F) erstreckt,
   - und eine Einstelleinrichtung zwischen dem Zerteilwagen (5) und dem Stützträger (19) eingeschaltet ist, welche die Einstellung der Winkelposition des Stützträgers (19) bei Drehung um das Drehgelenk (28) herum sowie seine stellungsmäßige Festlegung sicherstellt.

2. Zerteilvorrichtung nach Anspruch 1, dadurch gekennzeichnet, daß das Drehgelenk (28) einerseits einen Trägerstützblock (27), der mit dem Zerteilwagen (5) verbunden ist und an dem zum Innenführungselement (21) hin weisenden Ende eine einen Gabelgelenkkopf (32) bildende Ausnehmung (29) aufweist, innerhalb deren der Stützträger (19) angelenkt ist, und andererseits einen Gelenkzapfen aufweist, der durch den Gabelgelenkkopf und den Stützträger hindurchgeht.

3. Zerteilvorrichtung nach Anspruch 2, dadurch gekennzeichnet, daß die Einstelleinrichtung zwischen dem Zerteilwagen (5) und dem Stützträger (19) auf der Seite angeordnet ist, die in Bezug auf das Drehgelenk (28) dem Innenführungselement (21) gegenüberliegt.

4. Zerteilvorrichtung nach Anspruch 3, dadurch gekennzeichnet, daß die Einstelleinrichtung vom Hydrauliktyp (44) ist.

5. Zerteilvorrichtung nach einem der Ansprüche 1 bis 4, dadurch gekennzeichnet, daß die Einstelleinrichtung einen Exzenter (38) aufweist.

6. Zerteilvorrichtung nach Anspruch 5, dadurch gekennzeichnet, daß der Exzenter aus einer Drehnocke (38) besteht, die exzentrisch zu seiner Drehachse angeordnet ist.

7. Zerteilvorrichtung nach Anspruch 3, dadurch gekennzeichnet, daß die Einstelleinrichtung Einstellschrauben vom Mikrometerschraubentyp aufweist.

8. Verfahren zum Zerteilen von Karkassen (2) von Schlachttieren durch Längszerteilen mit einer Schneideinrichtung (11, 12) die eine Schneideebene vorgibt,

wobei
- der Zerteilwagen (5) in Arbeitsstellung in Kontakt mit der Karkasse (2) gebracht wird und
- das Führungssystem (13) für die Zerteilung durch Anlegen des Innenführungselements und des Außenführungselements an die Wirbelsäule (18) der Karkasse (2) des Schlachttiers positioniert wird,

dadurch gekennzeichnet, daß
die Lage der Schneideebene in Bezug auf die Karkasse (2) durch Einstellung der Winkelstellung eines Stützträgers (19) des Innenführungselements eingestellt wird.

9. Verfahren nach Anspruch 8, dadurch gekennzeichnet, daß die Einstellung der Lage des Stützträgers (19) vor dem Zerteilen jeder Karkasse (2) durch Fernsteuerung durchgeführt wird.

Fig.1

Fig-2

IV

10

21

24

31 28

25 35

37

32

19

27

26

40

39

IV

38

41

EP 0 377 542 B1

Fig.3

Fig. 4

EP 0 377 542 B1

Fig. 5

Fig.6

EP 0 377 542 B1